# EUROPEAN PATENT SPECIFICATION

(11) **EP 2 178 182 B1**
(45) Date of publication and mention of the grant of the patent: **03.08.2016**
(21) Application number: 09173267.7
(22) Date of filing: 16.10.2009
(51) Int. Cl.: H02B 13/025

(54) **Device for pressure-release of gas-insulated apparatus**
Vorrichtung zur Druckentlastung einer gasisolierten Vorrichtung
Dispositif pour la détente dans un appareil à isolation gazeuse

(30) Priority: 16.10.2008 JP 2008267424
(43) Date of publication of application: 21.04.2010
(73) Proprietor: Kabushiki Kaisha Toshiba, Minato-ku Tokyo (JP)
(72) Inventor: Miyauchi, Yasuhisa, Tokyo (JP); Sukehara, Masami, Tokyo (JP); Matsuzaki, Jun, Tokyo (JP)
(74) Representative: Hoffmann Eitle

(56) References cited:
- DE-A1- 4 125 591
- DE-U1- 8 716 149
- US-A- 5 193 049

## Description

### BACKGROUND OF THE INVENTION

### 1. Field of the Invention

The present invention relates to a device for pressure-release of gas-insulated apparatus such as a gas-insulated cubicle wherein insulating gas is sealed in a box (casing or housing).

### 2. Description of the Related Art

Conventionally, in gas-insulated apparatus wherein electrical equipment such as circuit breakers is accommodated in a box and insulating gas such as SF₆ gas is sealed in the box, a pressure-release device is provided to release the insulating gas to outside the box, in order to protect the box and electrical equipment in the event of abnormal rise in pressure due to for example short-circuiting. The pressure-release device comprises for example a thin pressure-release plate that is deformed by a prescribed pressure, a knife that breaks the deformed pressure-release plate, and an O-ring or fixed member that fixes these in gas-tight fashion. An example is disclosed in Laid-open Japanese Patent Application No. 2001-119817 (pages 2 to 3, FIG. 1) (hereinbelow referred to as Patent Reference 1).

The above conventional pressure-release device for gas-insulated apparatus is subject to the following problems. As described above, the pressure-release device comprises for example a pressure-release plate, knife and fixed member, so the number of components is large. When the number of components becomes large, costs are increased and care has to be taken in assembly so that damage to the pressure-release plate or knife etc or adherence of foreign bodies thereto does not occur, which makes the assembly task difficult. If the device is not correctly assembled, it is difficult to achieve pressure-release at the prescribed pressure, and this may cause damage to the electrical equipment etc. A pressure-release device capable of releasing pressure in a reliable fashion and that is of a straightforward construction and can easily be assembled is therefore desired.

Document DE 41 25 591 further discloses a burst disc held in place by a pressure ring.

### SUMMARY OF THE INVENTION

The present invention was made in order to solve the above problems, its object being to provide a pressure-release device for gas-insulated apparatus whereby pressure can be reliably released by a straightforward construction.

In order to achieve the above object, a pressure-release device for gas-insulated apparatus according to the present invention is constructed as follows. Specifically, it has the features of claim 1.

With the present invention, the aperture of the box is blocked by the pressure release plate and the peripheral section of the pressure release plate is fixed by the plurality of restraining plates, so pressure release from the aperture can be reliably achieved in the event of the pressure within the box becoming elevated, by a straightforward construction.

### BRIEF DESCRIPTION OF THE DRAWINGS

FIG. 1 is a front view showing the construction of a pressure-release device for gas-insulated apparatus according to a first embodiment of the present invention;
FIG. 2 is a cross-sectional view showing the construction of a pressure-release device for gas-insulated apparatus according to a first embodiment of the present invention;
FIG. 3 is a front view showing the construction of a pressure-release device for gas-insulated apparatus according to a second embodiment of the present invention;
FIG. 4 is a front view showing the construction of a pressure-release device for gas-insulated apparatus according to a third embodiment of the present invention;
FIG. 5 is a front view showing the construction of a pressure-release device for gas-insulated apparatus according to a fourth embodiment of the present invention; and
FIG. 6 is a front view showing the construction of a pressure-release device for gas-insulated apparatus according to a fifth embodiment of the present invention.

### DETAILED DESCRIPTION OF THE PREFERRED EMBODIMENTS

An embodiment of the present invention is described below with reference to the drawings.

### [First embodiment]

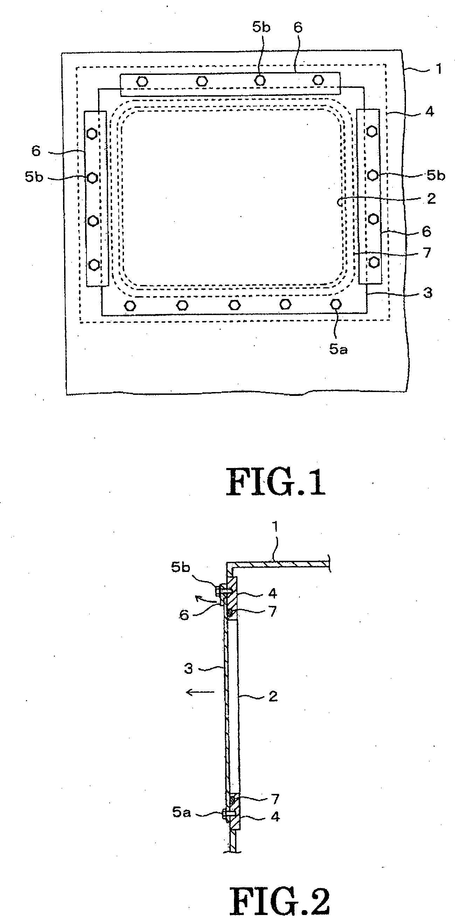

First of all, a pressure-release device for gas-insulated apparatus according to a first embodiment of the present invention will be described with reference to FIG. 1 and FIG. 2. FIG. 1 is a front view showing the construction of a pressure-release device for gas-insulated apparatus according to a first embodiment of the present invention. FIG. 2 is a cross-sectional view showing the construction of a pressure-release device for gas-insulated apparatus according to a first embodiment of the present invention.

As shown in FIG. 1, in a pressure-release device for gas-insulated apparatus, a rectangular aperture 2 provided in one side face of a box 1 that accommodates electrical equipment and in which insulating gas is sealed is blocked by a pressure-release plate 3 shaped as a rectangular plate larger than the aperture 2. The aperture 2 is provided in the middle of a flange 4 of large plate thickness that is welded in a gas-tight manner to the box 1.

One side, shown at the bottom in the Figure, of the pressure-release plate 3 is fixed to the flange 4 by a plurality of bolts 5a, while the other three sides are restrained by the surface at one edge of respective plate-shaped restraining plates 6. The other edges of the restraining plates 6 are fixed to the flange 4 by a plurality of bolts 5b. Specifically, the surface at one edge of the restraining plate 6 contacts and fixes the peripheral section of the pressure-release plate 3. Gas sealing is effected by providing an annular O-ring 7 on the flange 4 so as to surround the aperture 2.

Next, the pressure-release action will be described with reference to FIG. 2.

As shown in FIG. 2, when the pressure in the box 1 rises due to for example short-circuiting of the electrical equipment, when a prescribed pressure above the allowed pressure is reached, the pressure-release plate 3 bows outwards in the leftwards direction as shown by the arrow in the Figure, causing contact with the restraining plates 6 to be lost. Concurrently, the surface at one edge of the restraining place 6 on each side is bent in the leftwards direction as shown by the arrow in the Figure, by the stress on the pressure release plate 3. When this happens, insulating gas of high pressure is released from the aperture 2, so that the rise in pressure within the box 1 is restrained. In the event of pressure release, although the pressure-release plate 3 is bent, since one side is fixed by means of the bolts 5a, there is no possibility that it can fly off.

If the plate thickness of the pressure-release plate 3 and restraining plates 6 is made very much thinner than that of the box 1 and/or flange 4 etc, pressure release from the aperture 2 can be reliably achieved. Also, the pressure at which pressure release occurs can be controlled by adjusting the plate thickness of the pressure-release plate 3 and restraining plates 6.

Also, the box 1, flange 4, pressure-release plate 3 and restraining plates 6 etc may all be constructed of steel sheet but if stainless steel (SUS304), which is easier to bend than steel sheet at the same thickness, is employed for the pressure-release plate 3 and/or restraining plates 6, pressure release from the aperture 2 can be reliably achieved.

Since, with the pressure-release device for gas-insulated apparatus according to the first embodiment described above, the aperture 2 of the box 1 is blocked by the rectangular pressure-release plate 3 and the sides of the pressure-release plate 3 are fixed by contact with the surface at one edge of the restraining plates 6, in the event of rise of pressure in the box 1, the pressure-release plate 3 bows outwards, contact with the restraining plates 6 is lost, and release of pressure from the aperture 2 can be reliably achieved. Also, the construction of the pressure-release device is straightforward.

### [Second embodiment]

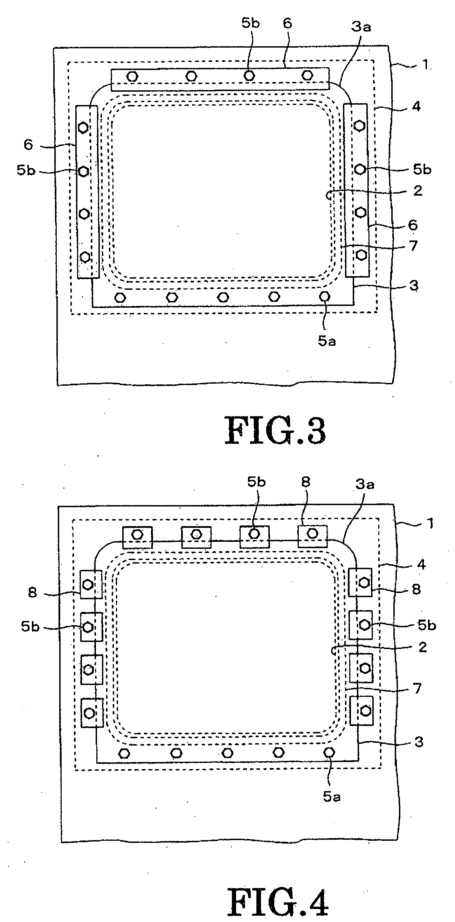

Next, a pressure-release device for a gas-insulated apparatus according to a second embodiment of the present invention will be described with reference to FIG. 3. FIG. 3 is a front view showing the construction of a pressure-release device for a gas-insulated apparatus according to a second embodiment of the present invention. The difference between this second embodiment and the first embodiment lies in the shape of the pressure-release plate. In FIG. 3, portions of the construction identical with the first embodiment are given the same reference symbols and further detailed description thereof is omitted.

As shown in FIG. 3, curved sections 3a are provided by rounding the corners of the pressure-release plate 3 formed between the restraining plates 6 at the top in the Figure.

In this way, since curved sections 3a are provided, contact with the restraining plates 6 can easily be released when the pressure-release plate 3 is bowed outwards.

With the pressure-release device for gas-insulated apparatus according to the above second embodiment, in addition to the benefits of the first embodiment, the pressure-release plate 3 is easily disengaged, so pressure release can be achieved more reliably in the event of rise in pressure within the box 1.

### [Third embodiment]

Next, a pressure-release device for a gas-insulated apparatus according to a third embodiment of the present invention will be described with reference to FIG. 4. FIG. 4 is a front view showing the construction of a pressure-release device for a gas-insulated apparatus according to a third embodiment of the present invention. The difference between this third embodiment and the second embodiment lies in the width of the restraining plates. In FIG. 4, portions of construction identical with the second embodiment are given the same reference symbols and further detailed description thereof is omitted.

As shown in FIG. 4, the restraining plates 8 provided at each side of the pressure-release plate 3 are of smaller width than that of the restraining plates 6 of the second embodiment, and are fixed by respective bolts 5b.

In this way, since the respective restraining plates 8 are of narrow width, they are easily bent in the event of rise in pressure. Also, even if the bowing-outward of the pressure-release plate 3 occurs more on one side than on another, pressure release can be performed by applying initial bending to the restraining plates 8 in that portion.

With the pressure-release device for a gas-insulated apparatus according to the above third embodiment, the same benefits as in the case of the second embodiment can be obtained.

### [Fourth embodiment]

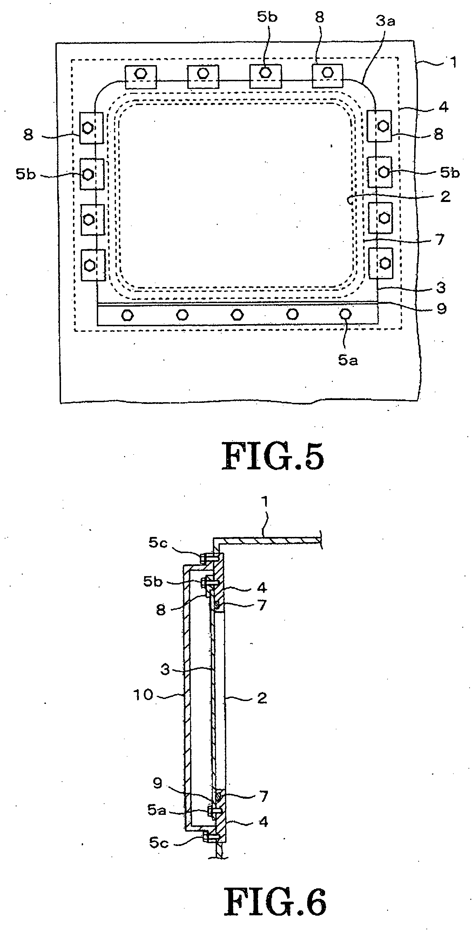

Next, a pressure-release device for a gas-insulated apparatus according to a fourth embodiment of the present invention will be described with reference to FIG. 5. FIG. 5 is a front face view showing the construction of a pressure-release device for a gas-insulated apparatus according to a fourth embodiment of the present invention. The difference between this fourth embodiment and the third embodiment lies in the provision of a slit in the pressure-release plate. In FIG. 5, portions of construction identical with the third embodiment are given the same reference symbols and further detailed description thereof is omitted.

As shown in FIG. 5, a hollow groove 9 whereby the pressure-release plate 3 is easily bent in the outside direction of the box 1 is provided in the pressure-release plate 3 on the side that is fixed by bolts 5a. It should be noted that an oval hollow could be provided instead of the groove 9. In addition, a groove 9 or hollow could be provided also in the restraining plates 8 so as to facilitate bending at the centre section. The grooves 9 or hollows will be referred to generically as slits.

With the pressure-release device for a gas-insulated apparatus according to the above fourth embodiment, the same benefits as in the case of the third embodiment can be obtained, but, in addition, bending of the pressure release plate 3 and/or restraining plates 8 is facilitated, so reliable pressure release in the event of a rise in pressure in the box 1 can be achieved.

### [Fifth embodiment]

Next, a pressure-release device for a gas-insulated apparatus according to a fifth embodiment of the present invention will be described with reference to FIG. 6. FIG. 6 is a cross-sectional view showing the construction of a pressure-release device for a gas-insulated apparatus according to a fifth embodiment of the present invention. The difference between this fifth embodiment and the fourth embodiment lies in the provision of protective plates on the outside of the pressure-release plate. In FIG. 6, portions of construction identical with the fourth embodiment are given the same reference symbols and further detailed description thereof is omitted.

As shown in FIG. 6, protective plates 10 which are in the form of plates of channel-section shape are provided on the outside of the pressure-release plate 3. A plurality of protective plates 10 are arranged, maintaining a prescribed separation with respect to the pressure-release plate 3. Both edges thereof are fixed to the flange 4 by means of bolts 5c.

With the pressure-release device for a gas-insulated apparatus according to this embodiment, in addition to the same benefits as in the case of the fourth embodiment, the range of bending of the pressure-release plate 3 can be restricted by means of the protective plates 10 and, in the event of the bolts 5a becoming detached, flying off of the pressure-release plate 3 can be prevented.

It should be noted that the present invention is not restricted to the embodiments described above and could be modified in various ways without departing from the scope of the invention. Although, in the above embodiments, the case where the aperture 2 and pressure-release plate 3 were rectangular was described, these two could be made of triangular or higher polygonal shape, or circular, or oval etc., but such a configuration does not form part of the claimed invention. In the case of a polygonal shape of the pressure-release plate, a plurality of restraining plates 6, 8 could be arranged facing each side, and, in the case of circular shape or the like, the restraining plates 6, 8 could be of sector shape matching the curvature thereof.

In more detail, the pressure-release plate 3 and/or aperture 2 need not be restricted in shape but the peripheral section thereof is fixed by the plurality of restraining plates 6, 8. The surface at one edge of the restraining plates 6, 8 contracts the peripheral section of the pressure-release plate 3 while their other edges are fixed by means of bolts 5b to the box 1. Also, part of the pressure-release plate 3 is directly fixed by bolts 5a to the box 1. It should be noted that, in cases where flying-off of the pressure-release plate 3 is allowable, fixing could be effected in all cases by means of the restraining plates 6, 8, instead of using bolts 5a, but such a configuration does not form part of the claimed invention.

## Claims

1. A pressure-release device for gas-insulated apparatus comprising:
an aperture (2) provided in a box (1) that accommodates electrical equipment;
a pressure-release plate (3) that blocks said aperture (2); and
an O-ring (7) provided between said-pressure-release plate (3) and said box so as to surround said aperture (2);
**characterised by** further comprising:
a plurality of restraining plates (6, 8) whereof one edge contacts a peripheral section of said pressure-release plate (3) and the other edge is fixed to said box (1),
wherein said aperture (2) and said pressure-release plate (3) are rectangular, one side of said pressure-release plate (3) is fixed to said box (1) by a bolt, and another side thereof is fixed by said restraining plate (8).

2. The pressure-release device for gas-insulated apparatus according to claim 1,
wherein a groove (9) or hollow is provided in at least one of said pressure-release plate (3) and said restraining plates (6, 8).

3. The pressure-release device for gas-insulated apparatus according to claim 1 or 2,
wherein a protective plate (10) is provided fixed to said box (1) outside said pressure-release plate (3).

4. The pressure-release device for gas-insulated apparatus according to any one of claims 1 to 3,
wherein a corner of said pressure-release plate (3) is given a curvature (3a).

## Patentansprüche

1. Druckentlastungseinrichtung für eine gasisolierte Vorrichtung, umfassend:
eine Öffnung (2), die in einem Gehäuse (1), in dem eine elektrische Vorrichtung aufgenommen ist, vorgesehen ist;
eine Druckentlastungsplatte (3), welche die Öffnung (2) blockiert; und
einen Dichtungsring (7), der zwischen der Druckentlastungsplatte (3) und dem Gehäuse so vorgesehen ist, dass er die Öffnung (2) umgibt;
**dadurch gekennzeichnet, dass** diese ferner umfasst:
mehrere Rückhalteplatten (6, 8), bei denen ein Rand einen Umfangsabschnitt der Druckentlastungsplatte (3) berührt und der andere Rand an dem Gehäuse (1) befestigt ist,
wobei die Öffnung (2) und die Druckentlastungsplatte (3) rechteckig sind, eine Seite der Druckentlastungsplatte (3) durch einen Bolzen an dem Gehäuse (1) befestigt ist und eine andere Seite derselben durch die Rückhalteplatte (8) befestigt ist.

2. Druckentlastungseinrichtung für eine gasisolierte Vorrichtung nach Anspruch 1,
bei der eine Nut (9) oder eine Aussparung in der Druckentlastungsplatte (3) und/oder den Rückhalteplatten (6, 8) vorgesehen ist.

3. Druckentlastungseinrichtung für eine gasisolierte Vorrichtung nach Anspruch 1 oder 2,
bei der eine Schutzplatte (10) vorgesehen ist, die außerhalb der Druckentlastungsplatte (3) an dem Gehäuse (1) befestigt ist.

4. Druckentlastungseinrichtung für eine gasisolierte Vorrichtung nach einem der Ansprüche 1 bis 3,
bei der eine Ecke der Druckentlastungsplatte (3) eine Rundung (3a) aufweist.

## Revendications

1. Dispositif de libération de pression pour un appareil à isolation gazeuse comprenant :
une ouverture (2) prévue dans un boîtier (1) qui loge l'équipement électrique ;
une plaque de libération de pression (3) qui bloque ladite ouverture (2) ; et
un joint torique (7) prévu entre ladite plaque de libération de pression (3) et ledit boîtier afin d'entourer ladite ouverture (2) ;
**caractérisé en ce qu'**il comprend en outre :
une pluralité de plaques de retenue (6, 8) dont un bord est en contact avec une section périphérique de ladite plaque de libération de pression (3) et l'autre bord est fixé sur ledit boîtier (1),
dans lequel ladite ouverture (2) et ladite plaque de libération de pression (3) sont rectangulaires, un côté de ladite plaque de libération de pression (3) est fixé audit boîtier (1) par un boulon et son autre côté est fixé par ladite plaque de retenue (8).

2. Dispositif de libération de pression pour un appareil à isolation gazeuse selon la revendication 1,
dans lequel une rainure (9) ou un creux est prévu(e) dans au moins l'une parmi ladite plaque de libération de pression (3) et lesdites plaques de retenue (6, 8).

3. Dispositif de libération de pression pour un appareil à isolation gazeuse selon la revendication 1 ou 2,
dans lequel une plaque de protection (10) est prévue de manière fixe sur ledit boîtier (1) à l'extérieur de ladite plaque de libération de pression (3).

4. Dispositif de libération de pression pour un appareil à isolation gazeuse selon l'une quelconque des revendications 1 à 3,
dans lequel un coin de ladite plaque de libération de pression (3) est doté d'une courbure (3a).
